# EUROPEAN PATENT APPLICATION

(11) **EP 1 139 206 A2**
(43) Date of publication of application: **04.10.2001**
(21) Application number: 01104312.2
(22) Date of filing: 22.02.2001
(51) Int. Cl.: G06F 1/32

(54) **Portable information processing apparatus having function of starting up the apparatus after automatically changing the setting of operation environment in accordance with residual amout of battery**

(30) Priority: 24.03.2000 JP 2000085116
(71) Applicant: KABUSHIKI KAISHA TOSHIBA, Kawasaki-shi (JP)
(72) Inventor: Okazawa, Eiji,, 1-1 Shibaura 1-chome Minato-ku Tokyo 105 (JP)
(74) Representative: Henkel, Feiler, Hänzel

(57) **Abstract**

A portable information processing apparatus (10) according to the present invention is operated with a power source detachably attached in the processor. The driving and control of the whole device is commanded with the main control unit (11). Furthermore, this portable information processing apparatus (10) has a normal mode for brightly lighting the illumination device (14) for the display device (13) and a power save mode for lighting the display device somewhat darkly for the power save. Then, when the start-up of the apparatus is designated from the input device (12) in the state in which the normal mode is set, the main control unit (11) starts up the apparatus after automatically changing the setting from the normal mode to the power save mode while notifying the automatic change of the setting with the output of the message or the like.

## Description

The present invention relates a portable Information processing apparatus having a function of starting up the apparatus after automatically changing the setting of operation environment in accordance with residual amount of battery.

In recent years, there have been developed various kinds of easily portable information processing apparatus capable of being driven with a battery which apparatus is referred to as, for example a PDA (Personal Digital Assistants) terminal.

In this kind of so-called portable information processing apparatus, there are provided in many cases a power save mode for controlling an operation to suppress consumed power to a minimum level in addition to a normal mode for controlling the operation with a view to give maximum range to the capacity of each function in order to prolong as much as possible a continuous operation time with power from the battery.

For example, when the portable information processing apparatus provided with an illumination device for a display device such as a back-light or the like is set to a normal mode by light adjustment with the adjustment of an amount of current which is allowed to run through the illumination device, the luminance of the illumination device is heightened. On the other hand, when portable information processing apparatus is set to a power save mode, the luminance of the illumination device is lowered.

As a consequence, for example, when the residual amount of the battery is sufficient, the display is brightened in the normal display. When the residual amount of the battery becomes small, a flexible operation is enabled such that the display becomes dark in the power save mode, but the operation thereof is prolonged as much as possible.

By the way, the portable information processing apparatus is set either to the normal mode or the power save mode in a predetermined operation by the user while the apparatus is being operated. Therefore, when the power source button is pressed down, the apparatus is started up by the setting of the mode at the previous time of the suspension of the apparatus.

From this fact, there arise the following problems with the conventional information processing apparatus having two modes, the normal mode and the power save.

Here, in the beginning, it is supposed that a voltage exceeding the voltage required for the start-up of the apparatus can be supplied from the battery when the power source is turned off. Next, it is supposed that the power source button is pressed, and the main control unit is turned on. Then, at this point, it is supposed that the voltage which can be supplied from the battery still exceeds a voltage required for starting up the apparatus.

However, after that, it is supposed that when the illumination device is turned on, the voltage which can be supplied from the battery has become lower than the voltage required for starting up the apparatus when the mode is set to the normal mode while in the power save mode the voltage barely exceeds a voltage required for starting up the apparatus when the mode is set to the power save mode.

In such a case, the portable information processing apparatus is started up anyway when the setting of the apparatus is in the power save mode. However, when the setting of the apparatus is the normal mode, the apparatus cannot be started up. Besides, while the apparatus is not being started up, the operating mode cannot be changed from the normal mode to the power save mode. Consequently, the user needs to replace the battery, despite that the apparatus can be started up in the power save mode.

The power remaining in the battery may be detected while the apparatus is operating, and the luminance of the back-light may be lowered in accordance with the remaining power detected. This technique is disclosed in Jpn. Pat. Appln. KOKAI Publication No. 6-83496.

In consideration of the above circumstances, an object of the invention is to provide a portable information processing apparatus having a function of starting up the apparatus after automatically changing the setting of an operation environment in accordance with the residual amount of the battery.

In order to realize this object, the portable information processing apparatus according to the present invention is constituted in such a manner that the apparatus is started up after the setting is automatically changed over to the power save mode when the residual amount of the battery becomes lower than the predetermined amount at the time of the start-up of the apparatus even if the apparatus is set to the normal mode.

Therefore, for this purpose, the present invention provides a battery driven portable information processor having a first mode which is operated in a first consumed power amount and a second mode which is operated in a consumed power amount smaller than the consumed power at the time of the first mode, characterized in that the apparatus comprises:
means for detecting a residual amount of the battery; and
means for starting up the apparatus after changing the setting to the second mode when the detected residual amount of the battery becomes lower than the predetermined amount when the instruction of the start-up of the apparatus is given in the state in which the first mode is set.

In the portable information processing apparatus according to the present invention, a so-called normal mode is preliminarily set in which the illumination device is lighted brightly or a display is provided in colors (a plurality of colors), and in addition the mode is automatically changed to the power save mode in which the illumination device is lighted darkly or a display is provided in monochrome (a single color) having consumed power smaller than the colors (a plurality of colors) in the case where the residual amount of the battery is on a level on which the apparatus cannot be started up, which leads to making an attempt of effectively use the battery and to improving the usage of thee battery.

In addition, when the change of the setting is reported at the time of changing the setting, it is possible to prevent giving unnecessary worry or misunderstanding to users even if the apparatus is started up in a mode which is not intended by users with the residual amount of the battery, that is, even if the apparatus is started up in the power save mode despite the fact that the user is intended to start up the apparatus in the normal mode.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is an external view showing a portable information processing apparatus according to an embodiment of the present invention.
FIG. 2 is a schematic structure view showing the portable information processing apparatus according to the same embodiment.
FIG. 3 is a view for illustrating a battery voltage judgment table incorporated in a main control unit of the portable information processing apparatus according to the same embodiment.
FIG. 4 is a flowchart for explaining an operation procedure at the time of the start-up of the apparatus of the portable information processing apparatus according to the same embodiment.
FIG. 5 is a view for illustrating a message which is displayed when the apparatus is started up after the portable information processor according to the embodiment automatically changes the setting.
FIG. 6 is a conceptual view for explaining an example in which the amount of consumed power is controlled with the change-over of the data display in the portable information processor according to the embodiment between colors (a plurality of colors) and a monochrome (a single color).

Embodiments of the present invention will be explained by referring to the drawings hereinafter.

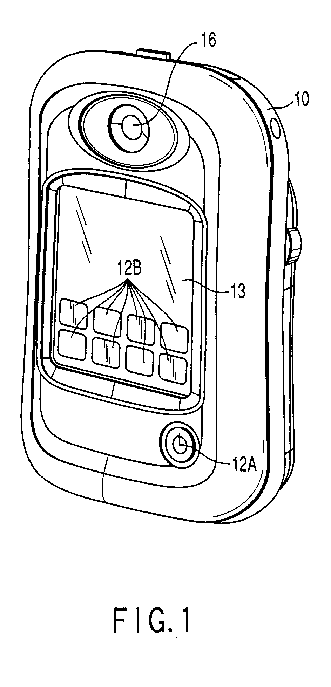

FIG. 1 is an external view showing a portable information processing apparatus according to an embodiment of the present invention.

This portable information processing apparatus 10 is operated with power from a battery that is detachably attached in the apparatus. Then, as shown in FIG. 1, this portable information processing apparatus is provided with a power source button 12A and an operation panel 12B as input devices. Then, the portable information processing apparatus 10 is provided with a display device 13. Besides, for example, a camera 16 is also provided for photographing, for example, faces of the users.

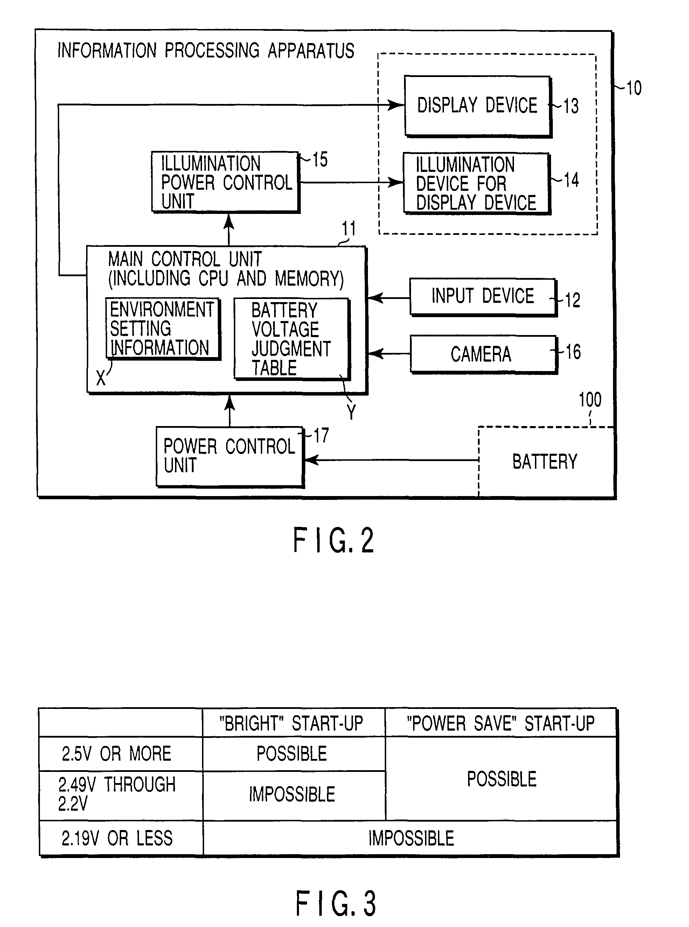

FIG. 2 is a view showing a schematic structure of this portable information processing apparatus 10.

The whole control of this portable information processing apparatus 10 is commanded with a main control unit 11. The main control unit 11 drives and operates the whole apparatus in accordance with operation contents of the input device 12 such as the power source button 12A or the operation panel 12B. This main control unit 11 has a CPU and a memory, and the CPU is operated on the basis of the description of the program stored in this memory so that the processor is driven and operated. Furthermore, in this memory, there are stored environment setting information X described later and a battery power judgment table Y.

In addition, this portable information processing apparatus 10 is provided with an illumination device (a back light or the like) 14 for this display device 13 together with the display device 13. The display device 13 is directly controlled with the main control unit 11. On the other hand, in the illumination device 14, the lighting and light adjustment are controlled with the illumination power control unit 15. This illumination power control unit 15 adjusts the amount of current supplied to the illumination device 14 in accordance with an instruction from the main control unit 11, and the main control unit 11 drives and controls this illumination power control unit 15 on the basis of the environment setting information X and the battery voltage judgment table Y described later.

Furthermore, this portable information processing apparatus 10 is provided with a power control unit 17. This power control unit 17 supplies and controls power from the battery 100 detachably attached in the apparatus to each unit, and is also provided with a function of detecting an output voltage value of the battery 100 to notify the voltage value to the main control unit 11.

The environment setting information X which the main control unit 11 stores in the memory denotes a content set by the user with respect to the operation of this portable information processing apparatus 10. This information includes luminance setting showing how the illumination device 14 is lit. More specifically, the mode is set to any of the modes, a bright mode (the normal mode), and a save mode (the power save mode). Since the amount of the consumed power may be large, the user sets the mode to the bright mode when the user desires that the display can be easily watched. On the other hand, when the user wants to set the consumed power to be small even if the display is not easy to watch, the user sets the mode to the power save mode.

On the other hand, the battery power judgment table Y which the main control unit 11 stores is a table which shows how much output voltage of the battery 100 is required in the setting of the bright mode and the power save mode at the time of lighting illumination device 14. FIG. 3 is a view showing a content of this battery voltage judgment table Y.

In the example shown in FIG. 3, in the case where the output voltage of the battery 100 is 2.5V or more, the apparatus can be started up when the luminance setting is set to any of the bright mode and the power save mode. Furthermore, in the case where the output voltage value is 2.49V through 2.2V, the apparatus can be started up at the time of the power save mode in the luminance setting. Furthermore, in the case where the output voltage value is 2.19V or less, the apparatus cannot be started up in the luminance setting both at the time of the bright mode and the power save mode.

Here, there is considered a case in which the luminance setting is set to the bright mode, and the output voltage value of the battery 100 is 2.4V. In this case, conventionally, the start-up of the apparatus is simply abandoned (for all the fact that the apparatus can be started up in the power save mode). Here, according to the present invention, in such a situation, the luminance setting is automatically changed from the bright mode to the power save mode. As a consequence, the apparatus is started up anyway with the result that an attempt is made to effectively use the battery 100, and the usage thereof can be improved as well.

Furthermore, in the case where the apparatus is started up after changing the luminance setting owing to the fact that the output voltage of the battery 100 is lower than the predetermined value (2.5 V in the example of FIG. 3), the main control unit 11 displays the change in the luminance setting on the display device 13 to be notified to the user. This is intended to prevent giving unnecessary worry and misunderstanding to the user when the apparatus is started up in the state which is different from the setting set by the user himself.

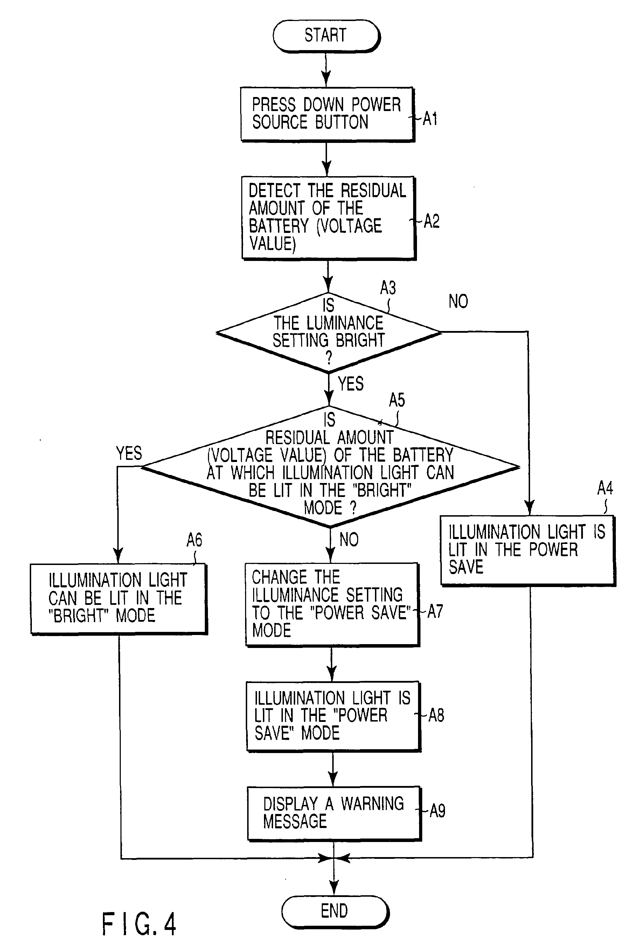

Next, an operation procedure at the time of the start-up of the apparatus of this portable information processing apparatus will be explained. FIG. 4 is a flowchart for explaining an operation procedure at the time of the start-up of the apparatus of the portable information processing apparatus.

In the beginning, the main control unit 11 detects the output voltage value of the battery 100 with the power control unit 17 (step A2) when the pressing of the power source button 12A is notified from the input device portion 12 to the main control unit 11 (step Al). Next, the main control unit 11 examines the current luminance setting by referring to the environment setting information X (step A3). When the luminance setting is set to the power save mode (NO at step A3), the main control unit 11 drives and controls the illumination power control unit 15 for lighting the illumination device 14 at the luminance setting of the power save mode (step A4).

Furthermore, when the luminance setting is set to the bright mode (YES at step A3), the main control unit 11 judges whether or not the output value of the battery 100 which is detected with the power control unit 17 on the basis of the content of the battery voltage judgment table Y is a value at which the apparatus can be started up in this "bright" luminance setting (step A5). Then, when the value is a value at which the apparatus can be started up (YES at step A5), the main control unit 11 drives and controls the illumination power control unit 15 with a view to light the illumination device 14 in the bright luminance setting (step A6).

On the other hand, when the value is a value at which the apparatus can be started up (NO at step A5), the main control unit 11 automatically changes the luminance setting to the power save mode (step A7) to drive and control the illumination power control unit 15 with a view to light the illumination device 14 at the luminance setting in the power save mode (step A8). Then, the main control unit 11 displays on the display device 13 a warning message for notifying the message that the luminance setting is changed to the power save mode (step A9).

As has been described above, this portable information processing apparatus 10 appropriately starts up the apparatus in accordance with the residual amount of the battery such that the luminance setting of the illumination device 14 is automatically changed in accordance with the state of the battery 100.

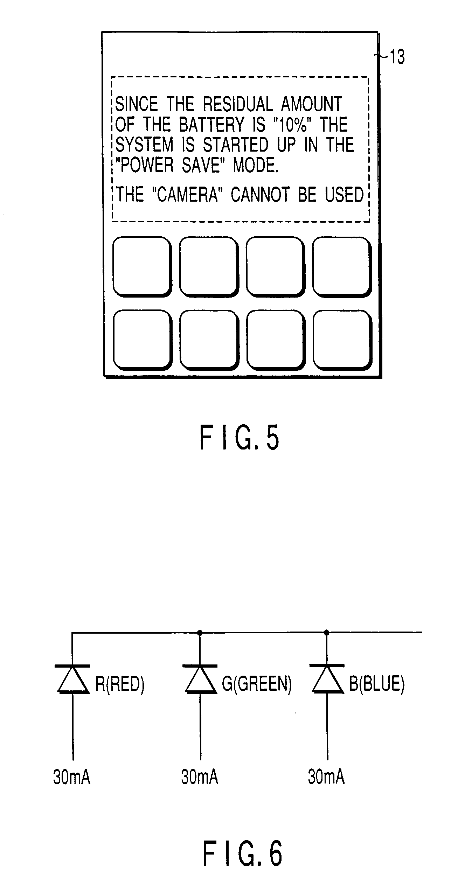

Incidentally, in the above embodiment, in the case where the apparatus is started up after changing the luminance setting from the bright mode to the power save mode, there is shown a case in which the start-up of the apparatus is displayed on the display device 13 to be notified to the user. At the same time, the estimation of the residual amount of the battery 100 may be displayed on the basis of the output voltage value of the battery 100 detected with the power source control unit 17. Furthermore, in the case where there is provided a function whose usage is limited in the power save mode such that a camera 16 can be used only in the normal mode or the like, the notification may be displayed to the effect that the usage of the function is limited when the apparatus is started up after changing the setting from the normal mode to the power save mode. FIG. 5 is a view showing an example in which the estimation of the residual amount of the battery 100 and the function whose usage is limited are displayed at the same time.

Furthermore, in the above embodiment, there is shown an example in which the amount of the consumed power is limited with the luminance setting of the illumination device 14. However, the present invention is not limited thereto. For example, the amount of the consumed power may be controlled with the change-over of the data display between the colors (a plurality of colors) and monochrome (a single color). For example, as shown in FIG. 6, in the case where the illumination device 14 generates and outputs the white color with three colors; R (red), G (green), and B (blue), it becomes possible to decrease the amount of the consumed power by outputting one of the colors out of the three colors at the time of the monochrome (single color). Besides, the present invention is not limited thereto, and the present invention can be applied to any one which can be set by the user and which affects the amount of the consumed power such as, for example, the frequency of the operation clock or the like.

## Claims

1. A battery driven type portable information processing apparatus having a first mode which is operated in a first consumed power amount and a second mode which is operated in a second consumed power amount smaller than the first consumed power amount, **characterized in that** said apparatus comprises:
means (17) for detecting a residual amount of the battery; and
means (11) for starting up the apparatus after changing the setting to the second mode when the detected residual amount of the battery becomes lower than the predetermined amount at the time of the instruction of the start-up of the apparatus in the state in which the first mode is set.

2. The portable information processing apparatus according to claim 1, **characterized in that** the first mode allows an illumination device for the display device to be lit at a first luminance, and the second mode allows the illumination device to be lit at a second luminance having an amount of consumed power smaller than the first luminance.

3. The portable information processing apparatus according to claim 1, **characterized in that** the first mode allows the display device to provide the display in a plurality of colors, and the second mode allows the display device to provide the display in a single color.

4. The portable information processing apparatus according to claim 1, **characterized by** further comprising:
means (11) for displaying the start-up of the apparatus when the apparatus is started up after the setting is changed from the first mode to the second mode.

5. The portable information processing apparatus according to claim 1, **characterized by** further comprising:
means (11) for displaying an estimation of a residual amount of the battery when the apparatus is started up after the setting is changed from the first mode to the second mode.

6. A battery driven type portable information processing apparatus having a first mode which is operated in a first consumed power amount and a second mode which is operated in a second consumed power amount smaller than the first consumed power amount, **characterized in that** said apparatus comprises:
means (17) for detecting an output voltage value of the battery; and
means (11) for starting up the apparatus after changing the setting to the second mode when the detected output voltage value of the battery becomes lower than the predetermined value at the time of the instruction of the start-up of the apparatus in the state in which the first mode is set.

7. The portable information processing apparatus according to claim 6, wherein the first mode allows the illumination device for the display device to be lit at the first luminance, and the second mode allows the illumination device to be lit at the second luminance having an amount of consumed power smaller than the first luminance.

8. The portable information processing apparatus according to claim 6, wherein the first mode allows the display device to be displayed in a plurality of colors in the first mode, and the second mode allows the display device to be displayed in a single color.

9. The portable information processing apparatus according to claim 6, further comprising:
means (11) for displaying the start-up of the apparatus when the apparatus is started up after changing the setting from the first mode to the second mode.

10. The portable information processing apparatus according to claim 6, further comprising:
means (11) for displaying an estimation of a residual amount of the battery when the apparatus is started up after changing the setting from the first mode to the second mode.

11. A method for starting up a apparatus of the battery driven type portable information processing apparatus having a first mode which is operated in a first consumed power amount and a second mode which is operated in a second consumed power amount smaller than the first consumed power amount, **characterized in that** said method comprises:
a step (A2) of detecting a residual amount of the battery; and
a step (YES of A5 and A7) of starting up the apparatus after changing the setting to the second mode when the detected residual amount becomes lower than the predetermined amount at the time of instruction of the start-up of the apparatus in the state in which the first mode is set.

12. The method for starting up the apparatus according to claim 11, wherein the first mode allows the illumination device for the display device to be lit at the first luminance, and the second mode allows the illumination device to be lit at the second luminance having the consumed power amount smaller than the first luminance.

13. The method for starting up the apparatus according to claim 11, wherein the first mode allows the display device to be displayed in a plurality of colors, and the second mode allows the display device to be displayed in a single color.

14. The method for starting up the apparatus according to claim 11, further comprising:
a step (A9) of displaying the start-up of the apparatus when the apparatus is started up after changing the setting from the first mode to the second mode.

15. The method for starting up the apparatus according to claim 11, further comprising:
a step (A9) of displaying the estimation of a residual amount of the battery when the apparatus is started up after changing the setting from the first mode to the second mode.

16. A method for starting up a apparatus of a battery driven type portable information processing apparatus having a first mode which is operated in a first consumed power amount and a second mode which is operated in a second consumed power amount smaller than the first consumed power amount, **characterized in that** said method comprises:
a step (A2) of detecting an output voltage value of the battery; and
a step (YES of A5 and A7) of starting up the apparatus after changing the setting to the second mode when the detected voltage value becomes lower than the predetermined value at the time of the instruction of the start-up of the apparatus designated in the state in which the first mode is set.

17. The method for starting up the apparatus according to claim 16, wherein the first mode allows the illumination device for the display device to be lit at the first luminance, and the second mode allows the display device to be lit at the second luminance having a consumed power amount smaller than the first luminance.

18. The method for starting up the apparatus according to claim 16, wherein the first mode allows the display device to be displayed in a plurality of colors, and the second mode allows the display device to be displayed in a single color.

19. The method for starting up the apparatus according to claim 16, further comprising:
a step (A9) of displaying the start-up of the apparatus when the apparatus is started up after changing the setting from the first mode to the second mode.

20. The method for starting up the apparatus according to claim 16, further comprising:
a step (A9) of displaying an estimation of the residual amount of the battery when the apparatus is started up after changing the setting from the first mode to the second mode.
